# EUROPEAN PATENT APPLICATION

(11) **EP 4 836 593 A1**
(43) Date of publication of application: **04.11.2026**
(21) Application number: 24912777.0
(22) Date of filing: 24.12.2024
(51) Int. Cl.: H05H 1/14, G21B 1/05

(54) **MIRROR FUSION DEVICE**

(30) Priority: 25.12.2023 JP 2023217576
(71) Applicant: Nihon University, Tokyo 102-8275 (JP); Linea Innovations, Inc., Tokyo, 106-6115 (JP)
(72) Inventor: ASAI, Tomohiko, Tokyo 102-8275 (JP); SAKAMOTO, Mizuki, Tokyo 106-6115 (JP)
(74) Representative: Parker, Andrew James
(86) International application number: PCT/JP2024/045588
(87) International publication number: WO 2025/142890

(57) **Abstract**

To provide a mirror-type fusion device capable of stably confining high-density plasma.

The mirror-type fusion device includes: a central chamber (10); a confining magnetic field generating unit (20); and a plasma generating unit (30). The central chamber (10) extends in the longitudinal direction for confining plasma. The confining magnetic field generating unit (20) includes at least two coils (21 and 21) arranged coaxially with a longitudinal axis of the central chamber (10) so as to face each other and is configured to generate a confining magnetic field (22) for confining plasma in a region between the two coils (21 and 21). The plasma generating unit 30 is connected to the central chamber (10 at a position between the two coils (21 and 21) of the confining magnetic field generating unit (20) and configured to rapidly form a high-density plasma region in the confining magnetic field (22).

## Description

### Technical Field

The present invention relates to a mirror-type fusion device, and more particularly to a mirror-type fusion device configured to confine plasma using a magnetic field.

### Background Art

Mirror-type fusion devices that confine plasma using a magnetic field to achieve nuclear fusion are known. Two coils are coaxially arranged so as to face each other, and a current is caused to flow through the coils in the same direction, thereby forming a magnetic field configuration in which the magnetic field is strong near the coils and weak between the coils. Charged particles in plasma move while spiraling around magnetic field lines and are reflected in regions where the magnetic field is strong, as if reflected by a mirror, and are thereby being confined between the two coils. This is the principle of plasma confinement in the mirror-type fusion device.

Plasma confined in the mirror-type fusion device is generated, for example, using a neutral beam. For example, in a device disclosed in Patent Document 1, a low-energy neutral beam is injected between magnetic confinement coils to generate plasma ions, which are then heated by radio-frequency electromagnetic waves to a temperature at which nuclear fusion occurs.

Further, a device disclosed in Patent Document 2 is configured to form a field-reversed configuration (FRC) plasma in a confining magnetic field. The FRC plasma is high-density plasma in which the plasma pressure is maintained solely by a poloidal magnetic field generated by a plasma current. In this device, FRC plasma generation devices configured to inject FRC plasma in an axial direction are disposed at both axial ends of two coils arranged coaxially so as to face each other. FRC plasma is injected from the respective FRC plasma generation devices toward a confining magnetic field along the axial direction, and the injected plasmas merge in a central region via magnetic reconnection.

Furthermore, a device disclosed in Patent Document 3 is also configured to supply plasma in an axial direction from plasma supply sources disposed at both ends of two coils arranged coaxially so as to face each other. Charged particles of the supplied plasma interacts with a strong magnetic field generated by a betatron flux coil disposed at a central region between the coils in the axial direction, and is accelerated, thereby causing magnetic reconnection to form FRC plasma.

### Citation List

### Patent Document

Patent Document 1: JP 2023 - 520 020 A
Patent Document 2: U.S. Patent Application Publication US 2019/0139649 A
Patent Document 3: JP 2006 - 308 604 A

### Disclosure of the Invention

### Problems to be Solved by the Invention

However, devices such as the one disclosed in Patent Document 1 that generate plasma using a neutral beam have difficulty in forming plasma having a sufficiently high density in a confining magnetic field. Further, stably confining plasma, which tends to escape outward, within a confining magnetic field is challenging.

On the other hand, in devices disclosed in Patent Document 2 or 3 that use FRC plasma, the FRC plasma forms a high-density region with a closed magnetic field line structure, so that high-density plasma can be stably confined within a confining magnetic field. However, since anchor sections, thermal barrier sections, end sections, and the like are provided at both ends of the confining magnetic field, it is necessary to inject FRC plasma using an FRC plasma generation device from a position remote from the confining magnetic field in order to supply the FRC plasma along an axial direction of coils arranged so as to face each other. This not only requires addressing neutron exposure and thermal loads, but also makes it difficult to control the plasma via magnetic field lines from a position remote from the confining magnetic field.

Thus, the development of a mirror-type fusion device capable of stably confining high-density plasma has been desired.

The present invention has been made in view of the above circumstances, and an object thereof is to provide a mirror-type fusion device capable of stably confining high-density plasma.

### Means for Solving the Problems

To achieve the above object of the present invention, a mirror-type fusion device may include: a central chamber extending in the longitudinal direction and configured to confine plasma; a confining magnetic field generating unit including at least two coils arranged coaxially with a longitudinal axis of the central chamber so as to face each other, the confining magnetic field generating unit being configured to generate a confining magnetic field for confining plasma in a region between the two coils; and a plasma generating unit connected to the central chamber at a position between the two coils of the confining magnetic field generating unit and configured to form, in the confining magnetic field, a plasma region having a predetermined density equal to or higher than a density capable of sustaining a nuclear fusion reaction in a predetermined period of time shorter than at least the magnetic field diffusion time or the growth time of MHD instability.

The plasma generating unit may include at least a pair of magnetized plasmoid generating devices arranged so as to face each other across the longitudinal direction of the central chamber, and the pair of magnetized plasmoid generating devices simultaneously inject plasmoids into the central chamber with sufficient momentum to penetrate the confining magnetic field so as to cause the injected plasmoids to collide with each other in the confining magnetic field and merge while offsetting their momenta.

The pair of magnetized plasmoid generating devices may be provided as a plurality of pairs thereof, and each of the plurality of pairs sequentially and intermittently inject plasmoids.

The device may further include a magnetic field applying unit configured to apply a magnetic field in a direction to weaken the confining magnetic field when the pair of magnetized plasmoid generating devices simultaneously inject plasmoids.

The plasma generating unit may be constituted by one of a field-reversed configuration plasma generating device and a field-reversed theta-pinch device.

The plasma generating unit may be constituted by a laser ablation device configured to irradiate a target introduced into the central chamber with laser light to form a plasma region of a laser ablation plasma in the confining magnetic field.

The device may further include a neutral beam injection device configured to inject a neutral beam into the central chamber so as to heat the plasma region in the confining magnetic field and induce a nuclear fusion reaction, or a high-frequency heating device configured to heat the plasma region in the confining magnetic field.

The device may further include a reflecting unit configured to confine fusion-generated particles escaping along magnetic field lines of the confining magnetic field in the longitudinal direction of the central chamber.

The device may further include an end unit configured to extract energy from fusion-generated particles escaping along magnetic field lines of the confining magnetic field in the longitudinal direction of the central chamber.

### Advantageous Effects of the Invention

The mirror-type fusion device according to the present invention is advantageous in that it can stably confine high-density plasma.

### Brief Description of the Drawings

FIG. 1 is a schematic cross-sectional side view illustrating a mirror-type fusion device according to the present invention.
FIG. 2 is a schematic cross-sectional front view illustrating another example of the mirror-type fusion device according to the present invention.
FIG. 3 is a schematic cross-sectional side view illustrating the overall configuration of the mirror-type fusion device according to the present invention.
FIG. 4 is a schematic cross-sectional side view illustrating still another example of the mirror-type fusion device according to the present invention.
FIG. 5 is a view illustrating the distribution of field-reversed configuration plasma over time formed by the mirror-type fusion device according to the present invention.

### Best Mode for Carrying Out the Invention

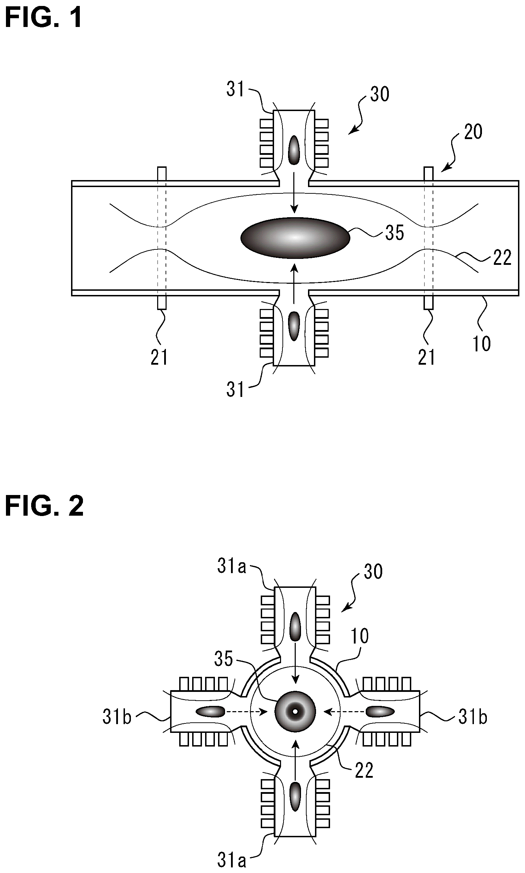

Hereinafter, an embodiment for practicing the present invention will be described with reference to the illustrated examples. FIG. 1 is a schematic cross-sectional side view illustrating a mirror-type fusion device according to the present invention. It should be noted that the illustrated example is provided for conceptual purposes only, and the thickness, length, and the like of the wall are not limited to those illustrated. As illustrated, the mirror-type fusion device according to the present invention mainly includes a central chamber 10, a confining magnetic field generating unit 20, and a plasma generating unit 30.

The central chamber 10 is for confining plasma. The central chamber 10 extends in the longitudinal direction. Specifically, the central chamber 10 may be formed in a cylindrical shape, the interior of which is in a vacuum state or a near-vacuum state.

The confining magnetic field generating unit 20 includes two coils 21 and 21 arranged coaxially along the longitudinal axis of the central chamber 10 so as to face each other. The confining magnetic field generating unit 20 may be configured to generate a confining magnetic field using the two coils 21 and 21, which are referred to as "mirror coils". Although the coils 21 and 21 are arranged around the outer periphery of the central chamber 10 in the illustrated example, the present invention is not limited thereto, and they may be arranged on the inner periphery of the central chamber 10. The confining magnetic field generating unit 20 is configured to generate a confining magnetic field 22 for confining plasma between the two coils 21 and 21.

Specifically, a current is caused to flow through the coils 21 and 21 in the same direction, thereby forming a magnetic field configuration in which the magnetic field is strong near the coils 21 and 21 and weak between the coils. Plasma is reflected in regions near the two coils 21 and 21 where the magnetic field is strong, and is thereby being confined between the two coils 21 and 21.

Although the confining magnetic field generating unit 20 is constituted by the two coils 21 and 21 in the illustrated example, the present invention is not limited thereto, and a greater number of coils may be arranged coaxially along the longitudinal axis of the central chamber 10 so as to appropriately control the confining magnetic field 22.

The plasma generating unit 30 is connected to the central chamber 10 at a position between the two coils 21 and 21 of the confining magnetic field generating unit 20. As illustrated, the plasma generating unit 30 in the mirror-type fusion device according to the present invention is not disposed on the longitudinal axis of the central chamber 10 but is connected between the two coils 21 and 21, i.e., to the outer periphery of the central chamber 10 so as to be orthogonal to the longitudinal direction.

The plasma generating unit 30 is configured to rapidly form a high-density plasma region 35 in the confining magnetic field 22. That is, the plasma generating unit 30 rapidly forms a closed magnetic field line structure in the confining magnetic field 22. Forming the plasma region 35 having the closed magnetic fled line structure allows a reduction in the fusion-generated particles escaping along magnetic field lines of the confining magnetic field 22 in the longitudinal direction of the central chamber 10.

Here, the rapid formation of the high-density plasma region 35 will be described in more detail. The rapid formation of the plasma region 35 refers to forming the plasma region 35 within a predetermined period of time shorter than at least the magnetic field diffusion time or the growth time of MHD instability. The predetermined period of time depends not only on the plasma temperature and plasma density but also on the geometrical size of the central chamber 10.

For example, in a demonstration experiment, the predetermined period of time is preferably several tens of microseconds, and more preferably about ten microseconds. Thus, the plasma region 35 needs only to be formed within a time shorter than the magnetic field diffusion time or the growth time of MHD instability. The high-density plasma region 35 refers to a plasma region having a predetermined density equal to or higher than a density capable of sustaining a nuclear fusion reaction. Specifically, the predetermined density may be preferably 10¹⁹ m³.

Thus, it is sufficient that it can form the plasma region 35 having a density equal to or higher than a density capable of sustaining a nuclear fusion reaction. The plasma generating unit 30 of the mirror-type fusion device according to the present invention may be any existing or future device, as long as it can rapidly form such a plasmoid as a high-density plasma region 35 in the confining magnetic field 22.

In the illustrated example, it is illustrated as the plasma generating unit 30 having at least a pair of magnetized plasmoid generating devices 31 and 31 arranged across the longitudinal axis of the central chamber 10 so as to face each other. The pair of magnetized plasmoid generating devices 31 and 31 is configured to simultaneously inject plasmoids into the central chamber 10 with sufficient momentum to at least penetrate the confining magnetic field 22.

The injected plasmoids collide with each other in the confining magnetic field 22 and merge while offsetting their momenta, whereby the high-density plasma region 35 is rapidly formed. The phrase "a plasmoid is injected with sufficient momentum to at least penetrate the confining magnetic field 22" refers to injecting the plasmoid into the central chamber 10 at a pressure greater than the magnetic pressure of the confining magnetic field 22.

A specific example of the magnetized plasmoid generating device 31 used in the plasma generating unit 30 is a field-reversed configuration plasma generating device. The field-reversed configuration plasma generating device is configured to form a field-reversed configuration (FRC) plasma. In the field-reversed configuration plasma generating device, FRC plasma is accelerated so that plasmoids collide with each other across the confining magnetic field 22.

When the plasmoids injected with the same momentum collide with each other in the confining magnetic field 22, they merge in situ while offsetting their momenta, thereby rapidly forming a density gradient. The high-density plasma region 35 thus formed is confined within the confining magnetic field 22 generated by the confining magnetic field generating unit 20.

The internal current of the FRC plasma includes only a diamagnetic (diamag) current, so that when the density gradient is formed in the confining magnetic field 22 by the FRC plasma generating device within a period of time sufficiently shorter than the magnetic field diffusion time or the growth time of MHD instability, the high-density plasma region 35 is formed in a self-organizing manner by the diamagnetic current. That is, the high-density plasma region 35 is rapidly formed by accelerating FRC plasma so that plasmoids collide with each other in the confining magnetic field 22. The high-density plasma region 35 thus formed is retained near the center of the confining magnetic field 22.

The injection speed of a plasmoid in the FRC plasma generating device is, for example, 100 km/s or higher, preferably 300 km/s or higher, and more preferably 500 km/s or higher.

As described above, the mirror-type fusion device according to the present invention can rapidly form a high-density plasma region within the confining magnetic field, thereby enabling stable confinement of high-density plasma.

Although the magnetized plasmoid generating devices 31 and 31 are connected to the center of the central chamber 10 so as to be orthogonal thereto in the illustrated example, the present invention is not limited thereto. The magnetized plasmoid generating devices need not be arranged orthogonal to the central chamber 10, and may be arranged obliquely thereto, as long as the injected plasmoids collide with each other in the confining magnetic field 22.

Further, the magnetized plasmoid generating devices 31 and 31 need not be connected to the center of the central chamber 10, and may instead be connected to a position slightly offset laterally from the center. For example, when measuring instruments or the like are arranged around the center of the central chamber 10, the magnetized plasmoid generating devices 31 and 31 may be offset laterally or arranged obliquely so as to face each other.

Although the collision position of the plasmoids is preferably the center of the confining magnetic field 22, it may be slightly offset therefrom in the vertical and/or lateral direction. Even if the collision position is offset from the center, there is no problem because the high-density plasma region 35 is moved to the center by the confining magnetic field 22 and retained there.

A magnetic field applying unit may be provided to weaken the confining magnetic field 22 generated by the confining magnetic field generating unit 20 when plasmoids are injected into the central chamber 10 from the magnetized plasmoid generating devices 31 and 31. The magnetic field applying unit applies a magnetic field in a direction to weaken the confining magnetic field 22 when the magnetized plasmoid generating devices 31 and 31 simultaneously inject plasmoids. Specifically, the magnetic field applying unit may be disposed coaxially with the coils 21 of the confining magnetic field generating unit 20 and configured to cause a current to flow in a direction opposite to that of the current in the coils 21.

For example, the magnetic applying unit may apply a magnetic field in a pulsed manner in a direction to weaken the confining magnetic field 22 in synchronization with the injection of plasmoids. This reduces the momentum required for the magnetized plasmoid generating devices 31 and 31 to inject plasmoids, thereby suppressing the output of the magnetized plasmoid generating devices 31 and 31. It should be noted that when the confining magnetic field generating unit 20 itself weakens the confining magnetic field 22, responsiveness is reduced; however, when the magnetic field applying unit is used to apply a magnetic field in a direction to weaken the confining magnetic field 22, the confining magnetic field 22 can be weakened with good responsiveness.

In the example illustrated in FIG. 1, a pair of magnetized plasmoid generating devices 31 and 31 is used as the plasma generating unit 30. However, the present invention is not limited thereto, and a plurality of pairs of the magnetized plasmoid generating devices may be used. FIG. 2 is a schematic cross-sectional front view illustrating another example of the mirror-type fusion device according to the present invention. In the drawing, the same reference numerals as those in FIG. 1 denote the same parts.

As illustrated in FIG. 2, a pair of magnetized plasmoid generating devices 31 and 31 used as the plasma generating unit 30 of the mirror-type fusion device according to the present invention may be formed by a plurality of pairs (31a, 31a and 31b, 31b) of magnetized plasmoid generating devices 31 and 31. It is configured that the pairs sequentially and intermittently inject plasmoids.

That is, first, a pair of magnetized plasmoid generating devices 31a and 31a simultaneously inject plasmoids into the central chamber 10 to rapidly form the high-density plasma region 35 while causing the plasmoids to collide with each other in the confining magnetic field 22. Subsequently, another pair of magnetized plasmoid generating devices 31b and 31b simultaneously inject plasmoids into the central chamber 10 to rapidly form the high-density plasma region 35 while causing the plasmoids to collide with each other.

Thus, by using a plurality of pairs, plasmoids can be injected into the confining magnetic field 22 within a time shorter than the minimum continuous injection time of the magnetized plasmoid generating devices when additional injection of plasmoids is required. This allows the high-density plasma region 35 to be maintained for a long period of time. Although two pairs of magnetized plasmoid generating devices are used in the example illustrated in FIG. 2, the present invention is not limited thereto, and more pairs may be used.

In the above illustrated example, the magnetized plasmoid generating devices 31 and 31 serve as the plasma generating unit 30, and the field-reversed configuration plasma generating device is taken as a specific example thereof. However, the present invention is not limited thereto, and the magnetized plasmoid generating devices 31 and 31 may be a field-reversed theta-pinch device. The field-reversed theta-pinch device can form a spheromak-like plasma.

When field-reversed theta-pinch devices are used as the magnetized plasmoid generating devices 31 and 31, spheromak-like plasmas are simultaneously injected with sufficient momentum to penetrate the confining magnetic field 22, traverse the longitudinal direction of the central chamber 10, and collide with each other in the confining magnetic field 22. The spheromak-like plasmas then merge while offsetting their momenta, as a result, a density gradient is rapidly formed, and the high-density plasma region 35 is generated. As described above, in the mirror-type fusion device according to the present invention, the field-reversed theta-pinch device may be used as the plasma generating unit 30 to rapidly form the high-density plasma region 35 in the confining magnetic field 22.

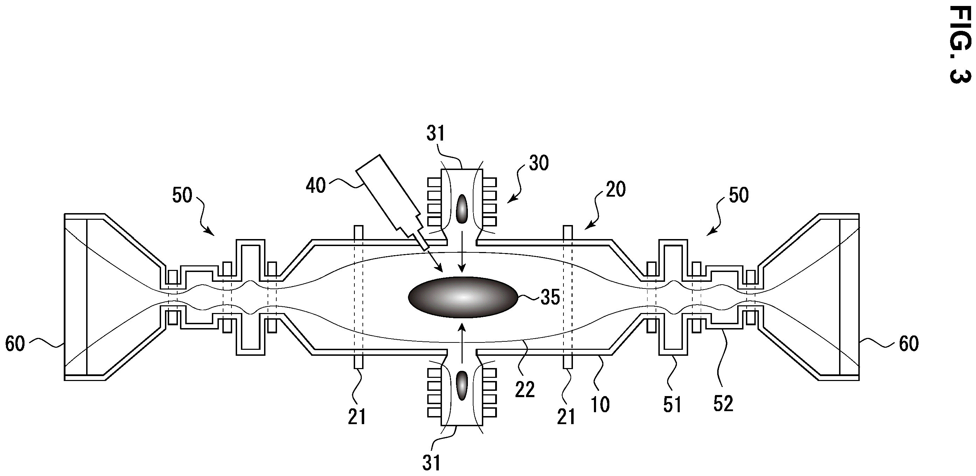

Next, the overall configuration of the mirror-type fusion device according to the present invention will be described in more detail. FIG. 3 is a schematic cross-sectional side view illustrating the overall configuration of the mirror-type fusion device according to the present invention. In the drawing, the same reference numerals as those in FIG. 1 denote the same parts. The example illustrated in FIG. 1 is a basic form of the so-called mirror-type fusion device, while the example illustrated in FIG. 3 is a so-called tandem mirror-type fusion device.

Also, it is illustrated that a pair of field-reversed configuration plasma generating devices is used as the plasma generating unit 30. However, the present invention is not limited thereto, and a pair of field-reversed theta-pinch devices may be used as described above. Further, as illustrated in FIG. 2, a plurality of paired magnetized plasmoid generating devices may be used.

As illustrated, the mirror-type fusion device of this example includes a reflecting unit 50. By using the reflecting unit 50, the device is configured as a magnetic tandem mirror fusion device. The reflecting unit 50 serves to confine fusion-generated particles escaping along magnetic field lines of the confining magnetic field 22 in the longitudinal direction of the central chamber 10. The reflecting unit 50 also serves to stabilize confined plasma. As illustrated, the reflecting unit 50 may be provided at both longitudinal ends of the central chamber 10, as illustrated.

The reflecting unit 50 may include, for example, an anchor unit 51 and a thermal barrier unit 52, as illustrated. The anchor unit 51 is configured to suppress growth of MHD instability. The thermal barrier unit 52 serves as a thermal barrier. Further, a potential barrier unit or a plug unit may be included as the reflecting unit 50. The potential barrier unit provides a barrier by an electric potential. The plug unit forms an electric-potential-based barrier.

The reflecting unit 50 may include one of the above-described units or a combination thereof. In the mirror-type fusion device according to the present invention, the plasma generating unit 30 is not disposed on the longitudinal axis of the central chamber 10 but is disposed orthogonal to the longitudinal direction of the central chamber 10, thereby allowing the reflecting unit 50 to be easily disposed at both longitudinal ends without limitation. In other words, the plasma generating unit 30 can be disposed near the confining magnetic field 22 without being affected by the reflecting unit 50 and rapidly form the high-density plasma region 35 in the confining magnetic field 22, thereby easily controlling plasma.

An end unit 60 may further be provided outside the reflecting unit 50. The end unit 60 is configured to extract energy from fusion-generated particles escaping along magnetic field lines of the confining magnetic field 22 in the longitudinal direction of the central chamber 10. In the mirror-type fusion device according to the present invention, the plasma generating unit 30 is not disposed on the longitudinal axis of the central chamber 10 but is disposed orthogonal to the longitudinal direction of the central chamber 10, thereby allowing the end unit 60 to be disposed at both longitudinal ends.

This allows the end unit 60 to extract energy directly from fusion-generated particles without being affected by the plasma generating unit 30. In the devices disclosed in Patent Documents 2 and 3 described in the Background Art, the plasma generating unit is required to be disposed on the longitudinal axis, which makes it difficult to dispose the end unit at both longitudinal ends.

Further, as illustrated in FIG. 3, the mirror-type fusion device according to the present invention may include a neutral beam injection device 40. The neutral beam injection device 40 is configured to inject a neutral beam into the central chamber so as to heat the plasma region 35 in the confining magnetic field 22 and induce a nuclear fusion reaction. That is, the neutral beam injection device 40 heats the plasma region 35 thus formed and induces a neutral beam-driven nuclear fusion reaction.

Even when plasmoids formed by the plasma generating unit 30 do not assume a field-reversed configuration, the neutral beam injection device 40 can heat the plasmoids to maintain the plasma region 35. In the mirror-type fusion device according to the present invention, the neutral beam injection device is not particularly limited, and any device capable of heating the plasma region in the confining magnetic field may be used, such as a high-frequency heating device.

In the mirror-type fusion device according to the present invention, the high-density plasma region 35 is retained at the center of the confining magnetic field 22. Accordingly, a neutral beam injected by the neutral beam injection device 40 can always be directed toward the center of the plasma region 35, thereby achieving high beam efficiency.

In the above example, the example is mainly explained that the plasma generating unit 30 is configured such that the pair of opposing magnetized plasmoid generating devices 31 and 31 disposed orthogonal to the longitudinal direction of the central chamber 10 simultaneously inject plasmoids into the central chamber 10 with sufficient momentum to allow them to penetrate the confining magnetic field 22 so that the injected plasmoids collide with each other in the confining magnetic field 22 and merge while offsetting their momenta, whereby the high-density plasma region 35 is rapidly formed.

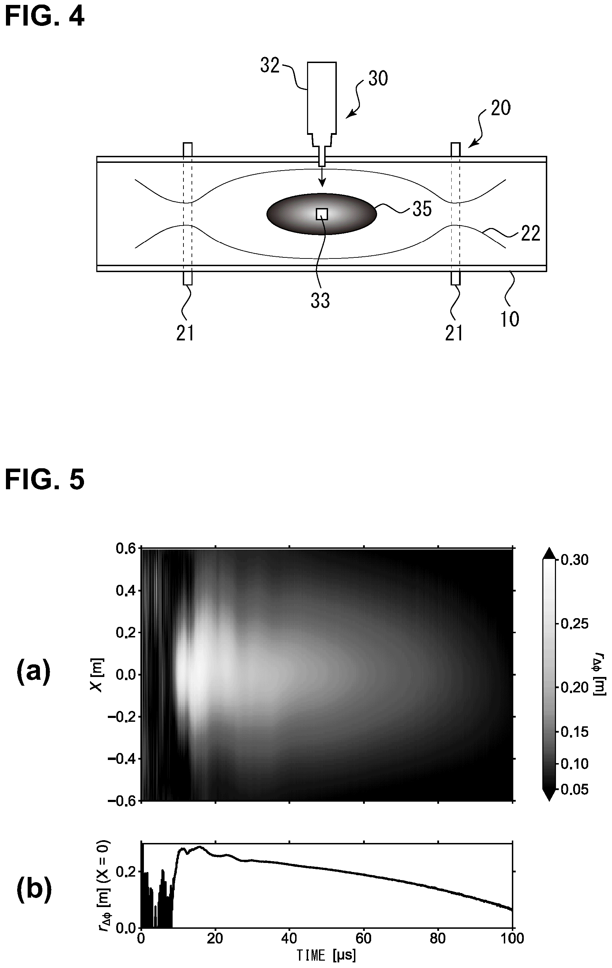

However, the mirror-type fusion device according to the present invention is not limited thereto. FIG. 4 is a schematic cross-sectional side view illustrating still another example of the mirror-type fusion device according to the resent invention. In the drawing, the same reference numerals as those in FIG. 1 denote the same parts.

As illustrated in FIG. 4, the plasma generating unit 30 of the mirror-type fusion device according to the present invention is constituted by a laser ablation device 32. The laser ablation device 32 is connected to the central chamber 10 at a position between the two coils 21 and 21 of the confining magnetic field generating unit 20. That is, the laser ablation device 32 is connected to the outer periphery of the central chamber 10 so as to be orthogonal to the longitudinal direction of the central chamber 10. The laser ablation device 32 is configured to irradiate a target 33 introduced into the central chamber 10 with laser light to rapidly form the high-density plasma region 35 of a laser ablation plasma.

Even in the case of laser ablation plasma, as described above, the rapid formation of the plasma region 35 refers to forming the plasma region 35 within a predetermined period of time shorter than at least the magnetic field diffusion time or the growth time of MHD instability. The predetermined period of time depends not only on the plasma temperature and plasma density but also on the geometrical size of the central chamber 10. For example, in a demonstration experiment, the predetermined period of time is preferably several tens of microseconds, and more preferably about ten microseconds.

Thus, even when the laser ablation device 32 is used, the plasma region 35 needs only to be formed within a period of time shorter than the magnetic field diffusion time or the growth time of MHD instability. Similarly, the high-density plasma region 35 refers to a plasma region having a predetermined density equal to or higher than a density capable of sustaining a nuclear fusion reaction. Specifically, the predetermined density may be preferably 10¹⁹ m⁻³. Thus, even when the laser ablation device 32 is used, it is sufficient to be able to form the plasma region 35 having a density equal to or higher than a density capable of sustaining a nuclear fusion reaction.

The laser ablation device 32 irradiates the target 33 with laser light when the target 33, introduced into the central chamber 10, is positioned at the center of the confining magnetic field 22. The material of the target 33 may be any material that can be heated by laser irradiation to form plasma, such as a metal, an insulator, or an oxide. As described above, by using the laser ablation device 32 and the target 33, the mirror-type fusion device according to the present invention may be configured to form a density gradient in the confining magnetic field 22 in a period of time sufficiently shorter than the magnetic field diffusion time or the growth time of MHD instability.

According to the mirror-type fusion device of the present invention, it can rapidly form the high-density plasma region in the confining magnetic field 22. The formed high-density plasma region can be brought to ignition as a thermal plasma, alternatively, it is also possible to maintain a high-energy beam, which provides a high nuclear fusion reaction cross section, in a moderately heated plasma for a long period of time. In this respect as well, it is advantageous to confine the high-density plasma region by means of a low magnetic field of a mirror of the confining magnetic field configuration generating unit.

Further, in the mirror-type fusion device according to the present invention, high-energy ion particles may be confined in the confining magnetic field, and a plasma core serving as a fusion reaction target may be formed as FRC plasma.

Next, experimental results regarding the formation of FRC plasma by the mirror-type fusion device according to the present invention will be described. FIG. 5 is a view illustrating the distribution of FRC plasma over time. The contour map of FIG. 5(a) shows a temporal change in the radial distribution of the FRC plasma along the mirror field axis (the longitudinal direction of the central chamber 10), and the graph of FIG. 5(b) shows a temporal change in the radius of the FRC plasma at the central cross section thereof.

The mirror-type fusion device according to the present invention used to form the FRC plasma illustrated in FIG. 5 has a configuration in which the pair of magnetized plasmoid generating devices 31 and 31 are arranged so as to face each other across the longitudinal direction of the central chamber 10 as illustrated in FIG. 1. The vertical axis in the map of FIG. 5(a) indicates a distance from a central axis X extending in the longitudinal direction of the central chamber 10. As can be seen from FIG. 5(a), in the mirror-type fusion device according to the present invention, FRC plasma having a magnetic field line structure extending not in the plasmoid injection-axis direction but in the longitudinal direction of the central chamber 10 is formed in a short period of time, and a high-density plasma region is stably maintained.

The mirror-type fusion device according to the present invention is not limited to the illustrated embodiments described above, and various modifications may be made without departing from the scope of the present invention.

### List of Reference Signs

10: Central chamber
20: Confining magnetic field generating unit
21: Coil
22: Confining magnetic field
30: Plasma generating unit
31: Magnetized plasmoid generating device
32: Laser ablation device
33: Target
35: Plasma region
40: Neutral beam injection device
50: Reflecting unit
51: Anchor unit
52: Thermal barrier unit
60: End unit

## Claims

1. A mirror-type fusion device configured to confine plasma using a magnetic field, the device comprising:
a central chamber extending in the longitudinal direction and configured to confine plasma;
a confining magnetic field generating unit including at least two coils arranged coaxially with a longitudinal axis of the central chamber so as to face each other, the confining magnetic field generating unit being configured to generate a confining magnetic field for confining plasma in a region between the two coils; and
a plasma generating unit connected to the central chamber at a position between the two coils of the confining magnetic field generating unit and configured to form, in the confining magnetic field, a plasma region having a predetermined density equal to or higher than a density capable of sustaining a nuclear fusion reaction in a predetermined period of time shorter than at least the magnetic field diffusion time or the growth time of MHD instability.

2. The mirror-type fusion device according to claim 1,
wherein the plasma generating unit includes at least a pair of magnetized plasmoid generating devices arranged so as to face each other across the longitudinal direction of the central chamber, and
the pair of magnetized plasmoid generating devices simultaneously inject plasmoids into the central chamber with sufficient momentum to penetrate the confining magnetic field so as to cause the injected plasmoids to collide with each other in the confining magnetic field and merge while offsetting their momenta.

3. The mirror-type fusion device according to claim 2,
wherein the pair of magnetized plasmoid generating devices is provided as a plurality of pairs thereof, and each of the plurality of pairs sequentially and intermittently inject plasmoids.

4. The mirror-type fusion device according to claim 2,
further comprising a magnetic field applying unit configured to apply a magnetic field in a direction to weaken the confining magnetic field when the pair of magnetized plasmoid generating devices simultaneously inject plasmoids.

5. The mirror-type fusion device according to any one of claims 2 to 4,
wherein the plasma generating unit is constituted by one of a field-reversed configuration plasma generating device and a field-reversed theta-pinch device.

6. The mirror-type fusion device according to claim 1,
wherein the plasma generating unit is constituted by a laser ablation device configured to irradiate a target introduced into the central chamber with laser light to form a plasma region of a laser ablation plasma in the confining magnetic field.

7. The mirror-type fusion device according to claim 1,
further comprising a neutral beam injection device configured to inject a neutral beam into the central chamber so as to heat the plasma region in the confining magnetic field and induce a nuclear fusion reaction, or a high-frequency heating device configured to heat the plasma region in the confining magnetic field.

8. The mirror-type fusion device according to claim 1,
further comprising a reflecting unit configured to confine fusion-generated particles escaping along magnetic field lines of the confining magnetic field in the longitudinal direction of the central chamber.

9. The mirror-type fusion device according to claim 1,
further comprising an end unit configured to extract energy from fusion-generated particles escaping along magnetic field lines of the confining magnetic field in the longitudinal direction of the central chamber.
